# EUROPÄISCHE PATENTANMELDUNG

(11) **EP 0 547 372 A1**
(43) Veröffentlichungstag der Anmeldung: **23.06.1993**
(21) Anmeldenummer: 92119315.7
(22) Anmeldetag: 12.11.1992
(51) Int. Cl.: F16F 1/36

(54) **Elastisches Lagerelement**

(30) Priorität: 18.12.1991 DE 4141850
(71) Anmelder: MAN Nutzfahrzeuge Aktiengesellschaft, 80976 München (DE)
(72) Erfinder: Gebhardt, Hans, Ing., W-8506 Langenzenn (DE)

(57) **Zusammenfassung**

Die Erfindung bezieht sich auf ein elastisches Lagerelement. Derartige Lagerelemente werden zur schwingungsdämpfenden Auflagerung von Brennkraftmaschinen verwendet, haben aber den Nachteil, daß sich der Elastomerblock 6 durch Kriechvorgänge senkt und die Motorwelle und die angetriebene Welle nicht mehr fluchten. Zur Überprüfung und Nachstellung des Höhenniveaus des Lagerelements wird die Zentral-Befestigungsschraube 7 erfindungsgemäß mit der Zentralbohrung 14 versehen, durch die ein Gewindebolzen 15 eingeführt wird, bis er am Grund aufsitzt. Die Überwurfkappe 18 wird mittels Gewinde 16 auf den Gewindebolzen 15 aufgeschraubt, bis sie auf dem Bauteil 2 spielfrei aufsitzt. Wenn sich das Bauteil 2 durch Kriechen des Elastomerblocks 6 absetzt entsteht zwischen Überwurfkappe 18 und Bauteil 2 ein Spiel und zeigt erfindungsgemäß an, daß das Höhenniveau des Lagerelements durch das Höhenverstellungsteil 10 nachgestellt werden muß, eine arbeitsintensive Auswechselung des Lagerelements ist nicht erforderlich.

## Beschreibung

Die Erfindung bezieht sich auf ein elastisches Lagerelement gemäß dem Gattungsbegriff.

Elastische Lagerelemente bestehen im wesentlichen aus einem Lager-Unterteil, einer Lagerkappe und einem dazwischenliegenden Elastomerblock. Bei derartigen elastischen Lagerelementen mit Elastomerblock stellt sich das Problem des Setzens, wodurch es bei Anwendung, beispielsweise als Motorlager, zwischen Motor und Getriebe zu einem Mittenversatz kommt. Das Lagerelement muß deshalb in gewissen Zeitabständen in der Höhe nachgestellt werden. Eine derartige Nachstellung gestaltet sich aber sehr arbeitsaufwendig, da die Anflanschwellen wie z. B. Gelenkwelle, Propellerwellen und elastische Kupplungen demontiert werden müssen.

Der Erfindung liegt deshalb die Aufgabe zugrunde, die Nachstellung sowie Auswechslung derartiger Lagerelemente zu vereinfachen, um den Arbeitsaufwand zu minimieren.

Erfindungsgemäß wird diese Aufgabe durch die kennzeichnenden Merkmale des Patentanspruches gelöst.

Der Gewindebolzen mit Überwurfkappe läßt ohne weiteres das Setzen erkennen. Dieses Setzen zeigt sich als Spiel zwischen dem Bauteil, beispielsweise einem Motor- oder Getriebefuß und der Überwurfkappe. Dieses Spiel kann dann durch Verdrehung des Oberteils der Höhenverstellung problemlos nachgestellt werden, ohne daß eine Demontage von Getriebeteilen erforderlich wäre.

Vorteilhafte Ausbildungen des Höhenverstellungsteiles sind in den Unteransprüchen 2 bis 4 enthalten.

Ein Ausführungsbeispiel der Erfindung ist in einer Zeichnung dargestellt.

Ein elastisches Lagerelement 1 dient der Abstützung eines Bauteils 2 gegenüber einem Fundament 3. Das Lagerelement 1 wird aus einem Lager-Unterteil 4 einer Lagerkappe 5 und einem zwischen den beiden Teilen angeordneten Elastomerblock 6 gebildet. Das Bauteil 2 - beispielsweise ein Motor- oder Getriebefuß - wird mittels einer Zentral-Befestigungsschraube 7 gegenüber der Lagerkappe 5 verspannt. Zu diesem Zweck ist die Zentral-Befestigungsschraube 7 in ein Zwischenteil 8 eingeschraubt, welches sich gegen die Lagerkappe 5 abstützt. Zum Verspannen ist eine Mutter 9 vorgesehen. Zwischen Bauteil 2 und Lagerkappe 5 ist ein Höhenverstellungsteil 10 angeordnet, welches sich in ein Unterteil 11 und ein Oberteil 12 gliedert. Das Oberteil 12 kann mittels Gewinde 13 durch Verdrehen gegenüber dem Unterteil 11 in seiner Höhe verstellt werden. Dies ist erforderlich, um eine Fluchtung einer nicht dargestellten Motorwelle und Getriebeteilen zu gewährleisten.

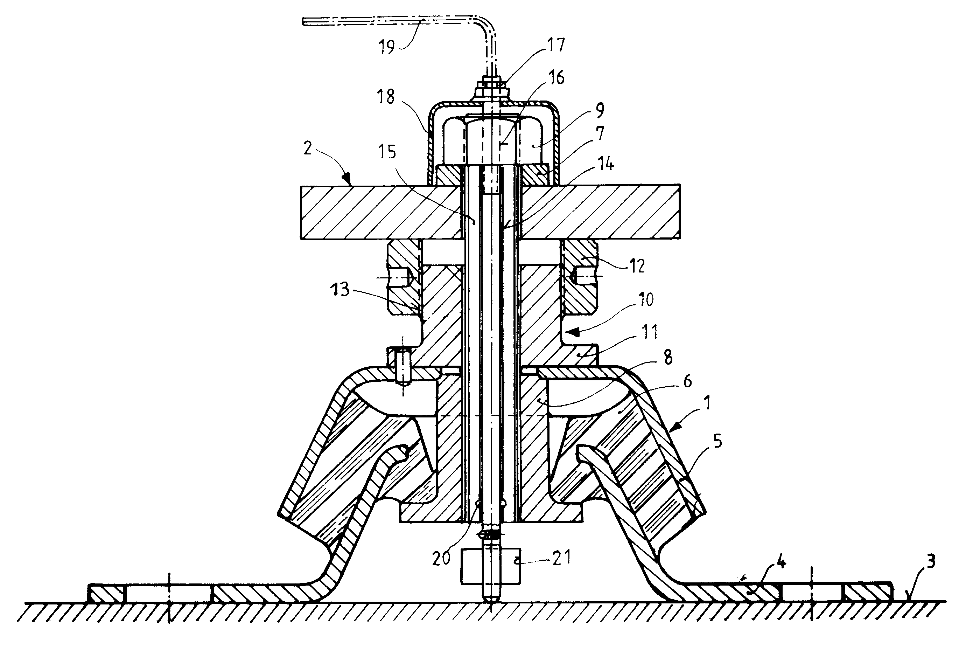

Anstelle der in der Zeichnung dargestellten Höhenvertelleinrichtung 10 können alternativ auch Beilagscheiben angewandt werden, welche entweder zwischen Lagerkappe 5 und dem Bauteil 2, oder aber zwischen Fundament 3 und Lager-Unterteil 4 eingelegt werden können, sofern besondere Anwendungsbereiche dies erfordern.

Der Elastomerblock 6 des Lagerelements 1 hat die unangenehme Eigenschaft, daß er sich nach erfolgtem Einfedern unter der Gewichtskraft eines zu tragenden Bauteiles 2 - beispielsweise einer Brennkraftmaschine - als Funktion der Zeit weiter setzt, vergleichbar dem Kriechen bestimmter Metalle.

Durch das Setzen wird die nach dem Einfedern vorhandene Fluchtung zerstört, so daß es zu einer mit der Zeit immer unangenehmeren Vibration der nicht mehr fluchtenden Bauteile kommt. Aus diesem Grund muß das Lagerelement nach einer gewissen Zeit in seiner Höhe nachgestellt werden.

Erfindungsgemäß kann dieses Nachstellen sowie Auswechseln ausgeführt werden, ohne daß dafür Kupplungen oder andere Getriebeteile demontiert werden müssen.

Zu diesem Zweck ist die Zentral-Befestigungsschraube 7 mit einer Zentralbohrung 14 versehen, in die ein Gewindebolzen 15 eingeführt wird. Dieser Gewindebolzen 15 weist an seinem oberen Ende ein Gewinde 16 auf, auf welches eine mit einer Sechskantmutter 17 drehfest verbundene Überwurfkappe 18 aufgeschraubt werden kann. Während des Aufschraubens der Überwurfkappe 18 kann der Gewindebolzen 15 mittels eines Schraubendrehers 19 an der Verdrehung gehindert werden. Bei der ersten Montage wird die Höhe des Bauteiles 2 nach erfolgter Einfederung mittels des Oberteils 12 des Höhenverstellungsteiles 10 zunächst so einjustiert, daß es den Einbaumaßen entspricht.

Die Höhenverstellung kann auch durch die Beilagscheiben erfolgen. Mutter 9 ist auf Vorspannung anzuziehen.

Nach erfolgter Erstmontage wird der Gewindebolzen 15 aus einer Kugelarretierung 20 durch Druck von oben so weit nach unten geschoben, bis er auf dem Fundament 3 aufsitzt. Anschließend schraubt man die Überwurfkappe 18 auf dem Gewinde 16 so weit nach unten, bis sie auf dem Bauteil 2 zur Anlage kommt. Um eine Drehung des Gewindebolzens 15 während der Drehung der Überwurfkappe 18 zu vermeiden wird der Schraubendreher 19 festgehalten. Nach erfolgter Justierung kann der Gewindebolzen 15 so weit zurückgezogen werden, bis die Kugelarretierung 20 einrastet und zur gesicherten Höhenlage der Mutter 17 auf dem Gewindebolzen 15 kann das freie Gewindeende des Gewindebolzens 15 mit Siegellack und/oder Klebstoff behandelt und/oder auch mit einer Kontermutter versehen werden.

Der Elastomerblock 6 wird sich nun einer zeitlichen Funktion folgend senken, so daß die Höhe des Bauteiles 2 nachzustellen ist.

Die Nachstellung erfolgt nun so, daß der Gewindebolzen 15 aus seiner Kugelarretierung 20 soweit nach unten gedrückt wird, bis er am Fundament 3 anschlägt. Da sich der Bauteil 2 gegenüber dem Zustand der Erstmontage abgesenkt hat wird ein Spiel zwischen der Überwurfkappe 18 und dem Bauteil 2 verbleiben. Um den Zustand der Erstmontage wieder herzustellen löst man zunächst die Mutter 9 und dreht diese hoch. Anschließend wird das Oberteil 12 des Höhenverstellungsteiles 10 durch Verdrehung gegenüber dem Unterteil 11 soweit hochgedreht, bis das Bauteil 2 wieder spielfrei an der Überwurfkappe 18 anliegt. Nun kann die Mutter 9 wieder angezogen werden, so daß das Bauteil 2 wieder fest mit der Lagerkappe 5 verbunden ist.

Anstelle des Höhenverstellungsteiles 10 können auch Beilagscheiben verwendet werden. Werden die Beilagscheiben zwischen Fundament 3 und Lager-Unterteil 4 eingeschoben, so wird die Mutter 9 nicht gelöst. Vielmehr müssen dann die nicht dargestellten Befestigungsschrauben zwischen Fundament 3 und Lager-Unterteil 4 gelöst und wieder angezogen werden.

Nach erfolgter Einjustierung wird der Gewindebolzen 15 hochgezogen bis die Kugelarretierung 20 einrastet.

Das Anschlagen des Gewindebolzens 15 am Fundament 3 kann auch durch ein Fenster 21 im Lager-Unterteil 4 kontrolliert werden.

Durch die erfindungsgemäße Anordnung kann auch einfach der Ausfall des Lagers 1 erkannt werden durch Überschreitung eines vorgegebenen Grenzwertes des Abstandes zwischen Bauteil 2 und Überwurfkappe 18. Im Rahmen einer vorbeugenden Instandsetzung wird das Lager dann wie nachstehend beschrieben ausgetauscht.

Der Gewindebolzen 15 wird komplett mit Überwurfkappe 18 und Sechskantmutter 17 aus der Zentralbohrung 14 gezogen. Danach wird defektes Lager 1 durch neue Teileeinheit 1 ersetzt. Der Gewindebolzen 15 wird wieder in die Zentralbohrung 14 eingeschraubt und mit Hilfe der Höhenverstellung 10 der Abstand zwischen 2 und 18 auf Null eingestellt.

Vorstehender Vorgang ist schnell, d. h. ebenfalls kostengünstig darstellbar.

## Patentansprüche

1. Elastisches Lagerelement, bestehend aus Lager-Unterteil, Lagerkappe und einem dazwischen liegenden Elastomerblock, bei dem das abzustützende Bauteil unter Zwischenschaltung eines Höhenverstellungsteils auf der Lagerkappe abgestützt ist und das Bauteil mit einer Zentral-Befestigungsschraube mit der Lagerkappe verbunden ist, dadurch gekennzeichnet, daß zur Überprüfung der Höhenlage des Bauteiles (2) die Befestigungsschraube (7) eine Zentralbohrung (14) aufweist, daß durch die Zentralbohrung (14) ein Gewindebolzen (15) einführbar ist, daß der Gewindebolzen (15) an seinem oberen Ende eine Überwurfkappe (18) aufweist, daß die Überwurfkappe (18) gegenüber dem Gewindebolzen (15) eine Arretierung in Form einer selbstsichernden Sechskantmutter (17) zur variablen Festlegung aufweist, und daß der Gewindebolzen (15) in der Zentralbohrung (14) in vorgegebener Position durch eine Kugelarretierung (20) arretierbar ist.

2. Elastisches Lagerelement nach Anspruch 1, dadurch gekennzeichnet, daß das Höhenverstellungsteil (10) aus einem mit der Lagerkappe fest verbundenen Unterteil (11) und einem mittels Gewinde (13) gegenüber diesem Unterteil (11) höhenverstellbaren Oberteil (12) gebildet wird.

3. Elastisches Lagerelement nach Anspruch 1, dadurch gekennzeichnet, daß das Höhenverstellungsteil (10) aus Beilagscheiben gebildet wird welche zwischen der Lagerkappe (5) und dem Bauteil (2) eingeschoben werden.

4. Elastisches Lagerelement nach Anspruch 1, dadurch gekennzeichnet, daß das Höhenverstellungsteil (10) aus Beilagscheiben gebildet wird welche zwischen dem Fundament (3) und dem Lager-Unterteil (4) eingeschoben werden.
